(19) Europäisches Patentamt
European Patent Office
Office européen des brevets

(11) **EP 2 393 327 A1**

(12) **EUROPEAN PATENT APPLICATION**

(43) Date of publication:
**07.12.2011 Bulletin 2011/49**

(51) Int Cl.:
**H04W 48/16** (2009.01)

(21) Application number: **10164698.2**

(22) Date of filing: **02.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Telefonaktiebolaget L M Ericsson 164 83 Stockholm (SE)**

(72) Inventor: **Strobl, Stefan 90587, Obermichelbach (DE)**

(74) Representative: **Schwarz, Markku Kraus & Weisert Patent- und Rechtsanwälte Thomas-Wimmer-Ring 15 D-80539 München (DE)**

(54) **Evaluation of Carrier Frequencies in a Mobile Communication System**

(57) So as to allow a user equipment (200) to efficiently evaluate carrier frequencies in a downlink frequency band supporting a plurality of bandwidths, possible carrier frequencies are separated into high priority carrier frequencies and low priority carrier frequencies. The high priority carrier frequencies have a high probability of hosting a cell (100-1, 100-2, 100-3, 100-4, 100-5, 100-6). Therefore, at least one of the high priority carrier frequencies is evaluated first. If no cell is found on the at least one high priority carrier frequency, the low priority carrier frequencies may be evaluated. The high priority carrier frequencies are selected to reflect probable bandwidth combinations in the frequency band. For this purpose, a starting carrier frequency is determined and a high priority bandwidth is selected from the supported bandwidths. The high priority carrier frequencies may the be determined so as to be spaced apart from the starting carrier frequency by an integer multiple of the high priority bandwidth.

FIG. 1

**Description**

Technical Field

The present invention relates to techniques for evaluating carrier frequencies in a mobile communication system.

Background

In mobile communication systems, it is known to use a plurality of frequency bands for communication between cells of the mobile communication system and a user equipment (UE). Each frequency band may in turn include a plurality of different channels using different carrier frequencies.

In such a communication system, the UE typically needs to find a downlink (DL) carrier frequency within the supported frequency bands, which is used by a cell providing a desired service. For this purpose, the UE may scan, for example at power-up or after loss of coverage, all supported DL frequency bands to find cells of a desired operator or service provider. However, depending on the used search strategy, such a scan may be excessively time consuming and also result in undesired battery consumption of the UE.

Further, with a technology referred to as 3GPP LTE (3GPP: Third Generation Partnership Project, LTE: Long Term Evolution), support of multiple different bandwidths in DL frequency bands has been introduced. In such a case, the different carrier frequencies may host channels having different bandwidth, which is not reflected by existing search strategies and causes existing search strategies to be not applicable or to lack efficiency.

Accordingly, there is a need for techniques which allow for efficiently evaluating carrier frequencies in a mobile communication system supporting a plurality of bandwidths in a DL frequency band.

Summary

According to an embodiment of the invention, a method is provided which can be used to evaluate carrier frequencies in a mobile communication system supporting a plurality of bandwidths in a downlink frequency band. According to the method, a starting carrier frequency in the downlink frequency band is determined and at least one high priority bandwidth is selected from the plurality of bandwidths. The starting carrier frequency and the high priority bandwidth are used to determine at least one high priority carrier frequency. The high priority carrier frequency, which is spaced apart from the starting carrier frequency by an integer multiple of the at least one high priority bandwidth, is evaluated so as to determine whether the at least one high priority frequency is used by a cell of the mobile communication system.

According to a further embodiment of the invention, a mobile terminal is provided. The mobile terminal may be used in a mobile communication system supporting a plurality of bandwidths in a downlink frequency band. The mobile terminal comprises a carrier frequency evaluator configured to determine a starting carrier frequency in said downlink frequency band and to select at least one high priority bandwidth from said plurality of bandwidths. Further, the carrier frequency evaluator is configured to determine at least one high priority carrier frequency which is spaced apart from the starting carrier frequency by an integer multiple of the at least one high priority bandwidth. The carrier frequency evaluator evaluates the at least one high priority carrier frequency so as to determine whether the at least one high priority frequency is used by a cell of the mobile communication system.

According to further embodiments, other methods or devices may be provided.

Brief Description of the Drawings

Fig. 1 schematically illustrates a mobile communication system in which concepts according to an embodiment of the invention are implemented.

Fig. 2 shows a table illustrating frequency bands used in a mobile communication system according to an embodiment of the invention.

Fig. 3 shows a table illustrating multiple-bandwidth support in frequency bands used in a mobile communication system according to an embodiment of the invention.

Fig. 4 shows a table illustrating frequency channels used in a mobile communication system according to an embodiment of the invention.

Fig. 5 schematically illustrates a mobile terminal according to an embodiment of the invention.

Fig. 6 shows a flowchart for illustrating a method according to an embodiment of the invention.

Detailed Description of Embodiments

In the following, the invention will be explained in more detail by referring to exemplary embodiments and to the accompanying drawings. The illustrated embodiments relate to evaluation of carrier frequencies in a mobile communication system supporting a plurality of bandwidths in a DL frequency band. According to the illustrated embodiments, the mobile communication system is implemented according to the 3GPP LTE specifications. However, it is to be understood that the concepts as described herein may also be applied in other types of mobile communication system supporting multiple different bandwidths in a DL frequency band.

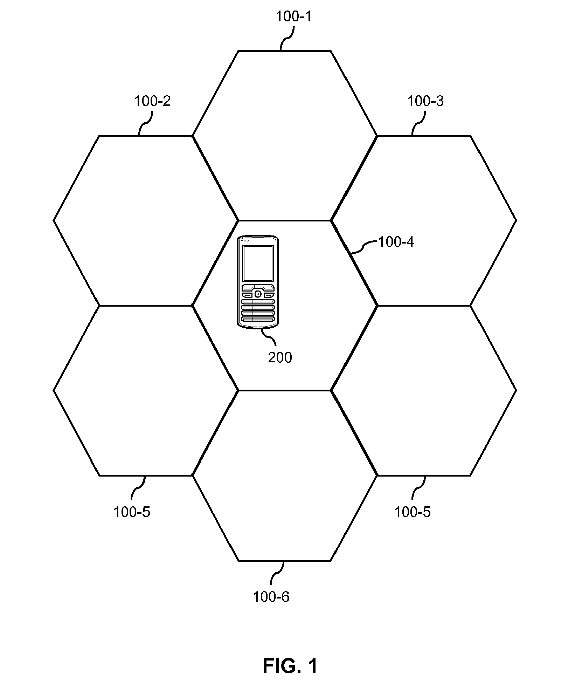

Fig. 1 schematically illustrates a number of cells 100-1, 100-2, 100-3, 100-4, 100-5, 100-6 of the mobile communication system and a UE 200 operable to communicate via one or more of the cells 100-1, 100-2, 100-3, 100-4, 100-5, 100-6 by receiving downlink (DL) communication signals from one or more of the cells 100-1, 100-2, 100-3, 100-4, 100-5, 100-6. Here, it is to be understood that the UE 200 may also transmit uplink (UL) communication signals to one or more of the cells 100-1, 100-2, 100-3, 100-4, 100-5, 100-6. However, the following description will focus on techniques of evaluating carrier frequencies used by the DL communication signals. As used herein, the UL direction refers to communication from the UE 200 to one or more base stations or cells, and the DL direction refers to communication from one or more base stations or cells to the UE 200. The UE 200 may be any type of mobile terminal, e.g. a mobile phone, a portable computer, or the like. Further, it is to be understood that the cells 100-1, 100-2, 100-3, 100-4, 100-5, 100-6 may each include one or more suitably configured base stations.

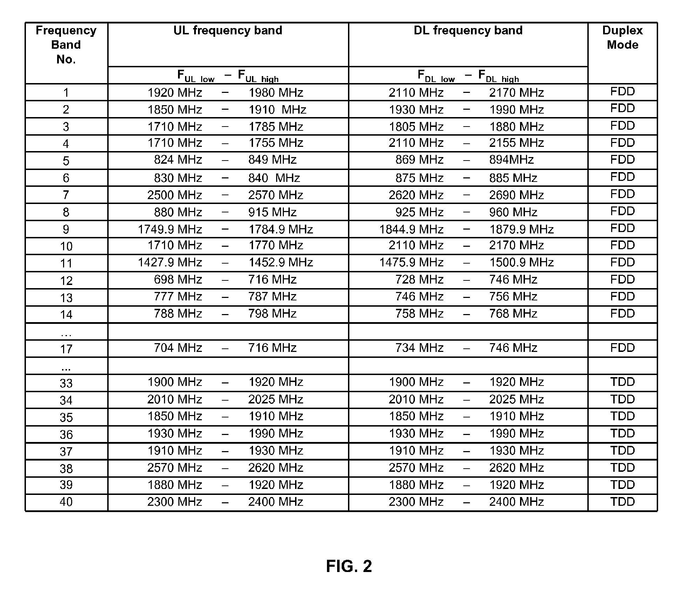

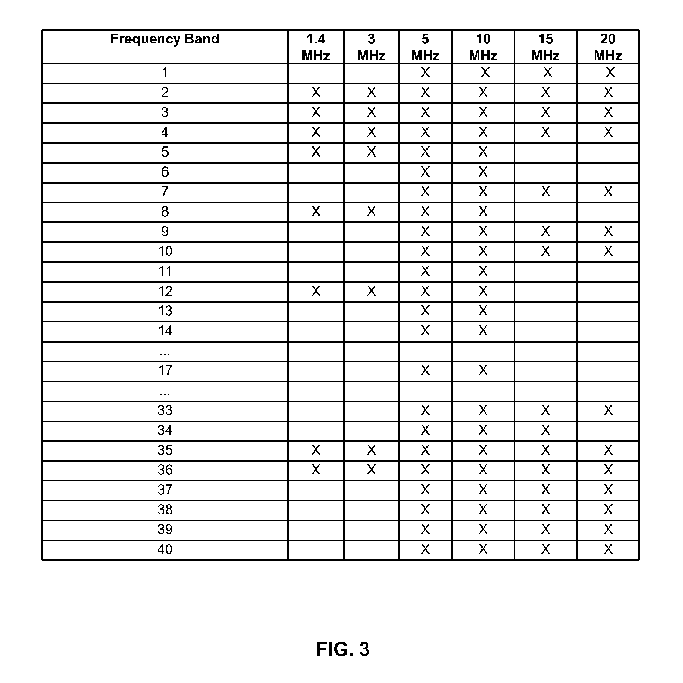

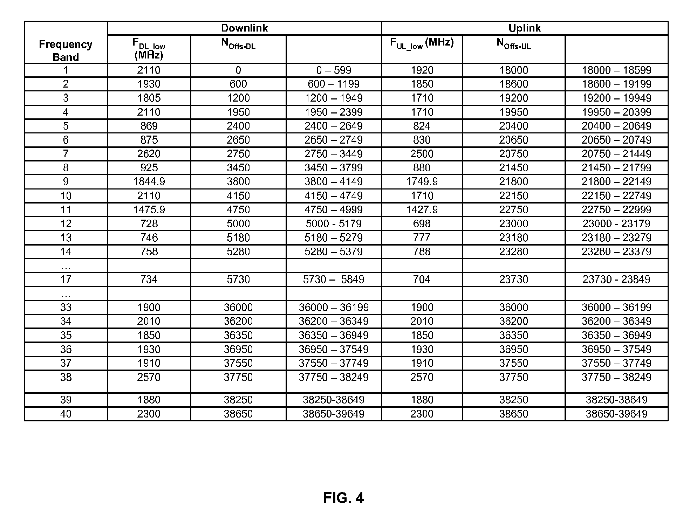

Figs. 2-4 illustrate properties of channels and frequency bands as used in the illustrated embodiment of the mobile communication system. The values as given in Figs. 2-4 correspond to 3GPP LTE technical specification 36.101. More specifically, the table of Fig. 2 shows frequency bands of the 3GPP LTE Release 8 technical specification, the table of Fig. 3 shows supported bandwidths in the DL frequency bands of the 3GPP LTE Release 8 technical specification, and the table of Fig. 4 shows channels and corresponding carrier frequencies of the 3GPP LTE Release 8 technical specification. Further details of the mobile communication system may correspond to this specification as well.

As can be seen from the table of Figs. 2-4, the mobile communication system supports a large number of DL carrier frequency candidates. Moreover, each DL frequency band supports multiple different bandwidths.

In the table of Fig. 2, the different UL frequency bands and DL frequency bands are shown with their respective frequency band number, lower frequency limit, upper frequency limit, and duplex mode. The lower frequency limit of the UL frequency bands is denoted by $F_{UL\_low}$, and the upper frequency limit of the UL frequency bands is denoted by $F_{UL\_high}$. The lower frequency limit of the DL frequency bands is denoted by $F_{DL\_low}$, and the upper frequency limit of the DL frequency bands is denoted by $F_{DL\_high}$. Possible duplex modes are Frequency Division Duplex (FDD) and Time Division Duplex (TDD).

According to the 3GPP LTE specifications, the possible carrier frequencies in the DL frequency bands are given by:

$$F_{DL} = F_{DL\_low} + 0.1(N_{DL} - N_{Offs\text{-}DL}),$$

with the values of $F_{DL\_low}$, $N_{DL}$ and $N_{Offs\text{-}DL}$ given by the table of Fig. 4. Accordingly, the carrier frequencies of neighboring channels in a DL frequency band are, in some embodiments of the invention, separated from each other by a carrier frequency raster of 100 kHz.

In the table of Fig. 3, supported bandwidths are indicated by "X". As can be seen, the bandwidths supported in the DL frequency bands are selected from the group consisting of 1.4 MHz, 3MHz, 5 MHz, 10 MHz, 15 MHz, and 20 MHz. Therefore, a plurality of different downlink carrier frequencies can be located within each of the supported bandwidths. Also, it should be noted that some of the supported bandwidths can be integer multiples of each other.

In the following concepts according to embodiments of the invention will be described, which allow for evaluating the downlink carrier frequencies in an efficient manner, taking into account that several bandwidth configurations are possible within each DL frequency band and assuming that information about the actually used bandwidth is not available prior to the evaluation.

According to these concepts, a DL frequency band to be evaluated may be separated into high priority carrier frequencies and low priority carrier frequencies. High priority carrier frequencies have a high probability of hosting a cell. Therefore, at least one of the high priority carrier frequencies is evaluated first. If no cell is found on the at least one high priority carrier frequency, the low priority carrier frequencies may be evaluated. The evaluation itself may be based on radio measurements, e.g. of spectral power density on the carrier frequencies, or may be based on cell synchronization processes. The high priority carrier frequencies are selected to reflect probable bandwidth combinations in the frequency band. For this purpose, a high priority bandwidth is determined. The at least one high priority carrier frequency is determined on the basis of the high priority bandwidth. More specifically, a starting carrier frequency in the DL frequency band may first be determined. The starting carrier frequency may be a carrier frequency which is known to be used by a cell. The high priority carrier frequency or frequencies may then be determined on the basis of this starting carrier frequency and the high priority bandwidth. In some embodiments, the high priority carrier frequency or frequencies are selected to be spaced apart from the starting carrier frequency by an integer multiple of the high priority bandwidth. The low priority carrier frequencies may be selected to be spaced apart from the high priority frequency or frequencies by an integer multiple of a carrier frequency raster used in the frequency band, e.g. by 100 kHz when assuming the above-mentioned carrier frequency raster according to the 3GPP LTE specifications.

In some embodiments, if no cell is found on a particular high priority carrier frequency, the second priority carrier frequencies directly adjacent to this first priority carrier frequency are evaluated before evaluating the next high priority carrier frequency. According to other embodiments, the low priority carrier frequencies are evaluated after all high priority carrier frequencies have been evaluated without finding a cell.

In some embodiments, if a cell is found, either on a high priority carrier frequency or on a low priority carrier frequency, new high priority carrier frequencies and low priority carrier frequencies may be determined on the basis of the frequency on which the cell was found, that is to say, the carrier frequency on which the cell was found may be used as a new starting carrier frequency, and the process of determining and evaluating high and low priority carrier frequencies may be repeated iteratively.

The concepts take advantage of the fact that the mobile communication system will typically use frequency resources in an efficient way in order to deliver a maximum bandwidth, which is achieved by locating the carrier frequencies used by adjacent cells next or close to each other.

In the following, the concepts will be described in more detail by referring to the frequency band structure as illustrated by the tables of Figs. 2-4. In the following description, $F_{CF}$ denotes a carrier frequency which is known or at least assumed to host a cell and is used as the starting carrier frequency. For example, $F_{CF}$ may have been found by a one by one scan of the carrier frequencies of the frequency band, e.g. in steps of 100 kHz, known by pre-configuration, or be learned from previous evaluations. For example, if a particular carrier frequency has been found to frequently host a cell in the past, this may be used as a basis for "learning" this particular carrier frequency as suitable starting carrier frequency. Here, it is to be understood that such a learning process may also differentiate between operators, i.e. different starting carrier frequencies may be learned for each operator. In the following examples, the high priority carrier frequencies will be denoted by $F_{H,M}$ and $F_{H,N}$, and the low priority carrier frequencies will be denoted by $F_{L,n}$, where M = 1, 2, ... and N = 1, 2, ...are indices denoting different high priority carrier frequencies and n = 1,2, ... is an index denoting different low priority carrier frequencies. The high priority carrier frequencies and the low priority carrier frequencies are selected in such a way that they are within the respective frequency band, i.e. are equal to or above the lower frequency band limit and below the upper frequency band limit as given in the table of Fig. 3. As will be seen, this imposes maximum limits for the indices M, N, and n. Moreover, in some embodiments the index n may be limited in such a way that the separation of the low priority carrier frequencies from the corresponding high priority carrier frequencies is not more than half of the selected high priority bandwidth. Also, in some embodiments evaluation information indicating carrier frequencies which have already been evaluated may be stored and excluded from being selected again as high priority carrier frequencies or low priority carrier frequencies in the same scan.

In frequency band No. 1 of Figs. 2-4, supported bandwidths are 5 MHz, 10 MHz, 15 MHz, and 20 MHz. In this case, 5 MHz may be selected as high priority bandwidth, and the high priority carrier frequencies are determined according to:

$$F_{H,M} = F_{CF} - M * 5 \text{ MHz}$$

and

$$F_{H,N} = F_{CF} + M * 5 \text{ MHz}.$$

In this frequency band, 5 MHz is an advantageous selection of the high priority bandwidth, because the other supported bandwidths are multiples thereof. In this way a high coverage of possible bandwidth combinations can be achieved.

In frequency bands Nos. 2-4 of Figs. 2-4, supported bandwidths are 1.4 MHz, 3 MHz, 5 MHz, 10 MHz, 15 MHz, and 20 MHz. In this case, a priority order of these supported bandwidths may be selected, and the high priority carrier frequencies are determined according to:

$$F_{H,M=1} = F_{CF} - [1.4 \text{ MHz}, 3 \text{ MHz}, 5 \text{ MHz}, 10 \text{ MHz}, 15 \text{ MHz}, 20 \text{ MHz}],$$

$$F_{H,M+1} = F_{H,M} - [1.4 \text{ MHz}, 3 \text{ MHz}, 5 \text{ MHz}, 10 \text{ MHz}, 15 \text{ MHz}, 20 \text{ MHz}],$$

$$F_{H,N=1} = F_{CF} + [1.4 \text{ MHz}, 3 \text{ MHz}, 5 \text{ MHz}, 10 \text{ MHz}, 15 \text{ MHz}, 20 \text{ MHz}],$$

and

$$F_{H,N+1} = F_{H,N} + [1.4 \text{ MHz}, 3 \text{ MHz}, 5 \text{ MHz}, 10 \text{ MHz}, 15 \text{ MHz}, 20 \text{ MHz}].$$

For example, the bandwidth of 1.4 MHz may be used first, i.e. as high priority bandwidth, to determine the next high priority carrier frequency, followed in increasing order by the other bandwidths of 3 MHz, 5 MHz, 10 MHz, 15 MHz, and 20 MHz. In this way, the evaluated interval around the starting carrier frequency will be successively increased.
In frequency band No. 5 of Figs. 2-4, supported bandwidths are 1.4 MHz, 3 MHz, 5 MHz, and 10 MHz. In this case, a priority order of these supported bandwidths may be selected, and the high priority carrier frequencies are determined according to:

$$F_{H,M=1} = F_{CF} - [1.4 \text{ MHz}, 3 \text{ MHz}, 5 \text{ MHz}, 10 \text{ MHz}],$$

$$F_{H,M+1} = F_{H,M} - [1.4 \text{ MHz}, 3 \text{ MHz}, 5 \text{ MHz}, 10 \text{ MHz}],$$

$$F_{H,N=1} = F_{CF} + [1.4 \text{ MHz}, 3 \text{ MHz}, 5 \text{ MHz}, 10 \text{ MHz}],$$

and

$$F_{H,N+1} = F_{H,N} + [1.4 \text{ MHz}, 3 \text{ MHz}, 5 \text{ MHz}, 10 \text{ MHz}].$$

For example, the bandwidth of 1.4 MHz may be used first, i.e. as high priority bandwidth, to determine the next high priority carrier frequency, followed in increasing order by the other bandwidths of 3 MHz, 5 MHz, and 10 MHz. In this way, the evaluated interval around the starting carrier frequency will be successively increased.
In frequency bands Nos. 6 and 7 of Figs. 2-4, supported bandwidths are multiples of 5 MHz. Accordingly, 5 MHz may be selected as high priority bandwidth, and the high priority carrier frequencies are determined according to:

$$F_{H,M} = F_{CF} - M * 5 \text{ MHz}$$

and

$$F_{H,N} = F_{CF} + M * 5 \text{ MHz}.$$

In frequency band No. 8 of Figs. 2-4, supported bandwidths are 1.4 MHz, 3 MHz, 5 MHz, and 10 MHz. In this case, a priority order of these supported bandwidths may be selected, and the high priority carrier frequencies are determined according to:

$$F_{H,M=1} = F_{CF} - [1.4 \text{ MHz}, 3 \text{ MHz}, 5 \text{ MHz}, 10 \text{ MHz}],$$

$$F_{H,M+1} = F_{H,M} - [1.4 \text{ MHz}, 3 \text{ MHz}, 5 \text{ MHz}, 10 \text{ MHz}],$$

$$F_{H,N=1} = F_{CF} + [1.4 \text{ MHz}, 3 \text{ MHz}, 5 \text{ MHz}, 10 \text{ MHz}],$$

and

$$F_{H,N+1} = F_{H,N} + [1.4 \text{ MHz}, 3 \text{ MHz}, 5 \text{ MHz}, 10 \text{ MHz}].$$

For example, the bandwidth of 1.4 MHz may be used first, i.e. as high priority bandwidth, to determine the next high priority carrier frequency, followed in increasing order by the other bandwidths of 3 MHz, 5 MHz, and 10 MHz. In this way, the evaluated interval around the starting carrier frequency will be successively increased.

In frequency bands Nos. 9-11 of Figs. 2-4, supported bandwidths are multiples of 5 MHz. Accordingly, 5 MHz may be selected as high priority bandwidth, and the high priority carrier frequencies are determined according to:

$$F_{H,M} = F_{CF} - M * 5 \text{ MHz}$$

and

$$F_{H,N} = F_{CF} + M * 5 \text{ MHz}.$$

In frequency band No. 12 of Figs. 2-4, supported bandwidths are 1.4 MHz, 3 MHz, 5 MHz, and 10 MHz. In this case, a priority order of these supported bandwidths may be selected, and the high priority carrier frequencies are determined according to:

$$F_{H,M=1} = F_{CF} - [1.4 \text{ MHz}, 3 \text{ MHz}, 5 \text{ MHz}, 10 \text{ MHz}],$$

$$F_{H,M+1} = F_{H,M} - [1.4 \text{ MHz}, 3 \text{ MHz}, 5 \text{ MHz}, 10 \text{ MHz}],$$

$$F_{H,N=1} = F_{CF} + [1.4 \text{ MHz}, 3 \text{ MHz}, 5 \text{ MHz}, 10 \text{ MHz}],$$

and

$$F_{H,N+1} = F_{H,N} + [1.4 \text{ MHz}, 3 \text{ MHz}, 5 \text{ MHz}, 10 \text{ MHz}].$$

For example, the bandwidth of 1.4 MHz may be used first, i.e. as high priority bandwidth, to determine the next high priority carrier frequency, followed in increasing order by the other bandwidths of 3 MHz, 5 MHz, and 10 MHz. In this way, the evaluated interval around the starting carrier frequency will be successively increased.

In frequency bands Nos. 13-34 of Figs. 2-4, supported bandwidths are multiples of 5 MHz. Accordingly, 5 MHz may be selected as high priority bandwidth, and the high priority carrier frequencies are determined according to:

$$F_{H,M} = F_{CF} - M * 5 \text{ MHz}$$

and

$$F_{H,N} = F_{CF} + M * 5 \text{ MHz}.$$

In frequency bands Nos. 35 and 36 of Figs. 2-4, supported bandwidths are 1.4 MHz, 3 MHz, 5 MHz, 10 MHz, 15 MHz, and 20 MHz. In this case, a priority order of these supported bandwidths may be selected, and the high priority carrier frequencies are determined according to:

$$F_{H,M=1} = F_{CF} - [1.4 \text{ MHz}, 3 \text{ MHz}, 5 \text{ MHz}, 10 \text{ MHz}, 15 \text{ MHz}, 20 \text{ MHz}],$$

$$F_{H,M+1} = F_{H,M} - [1.4 \text{ MHz}, 3 \text{ MHz}, 5 \text{ MHz}, 10 \text{ MHz}, 15 \text{ MHz}, 20 \text{ MHz}],$$

$$F_{H,N=1} = F_{CF} + [1.4 \text{ MHz}, 3 \text{ MHz}, 5 \text{ MHz}, 10 \text{ MHz}, 15 \text{ MHz}, 20 \text{ MHz}],$$

and

$$F_{H,N+1} = F_{H,N} + [1.4 \text{ MHz}, 3 \text{ MHz}, 5 \text{ MHz}, 10 \text{ MHz}, 15 \text{ MHz}, 20 \text{ MHz}].$$

For example, the bandwidth of 1.4 MHz may be used first, i.e. as high priority bandwidth, to determine the next high priority carrier frequency, followed in increasing order by the other bandwidths of 3 MHz, 5 MHz, 10 MHz, 15 MHz, and 20 MHz. In this way, the evaluated interval around the starting carrier frequency will be successively increased.
In frequency bands Nos. 37-40 of Figs. 2-4, supported bandwidths are multiples of 5 MHz. Accordingly, 5 MHz may be selected as high priority bandwidth, and the high priority carrier frequencies are determined according to:

$$F_{H,M} = F_{CF} - M * 5 \text{ MHz}$$

and

$$F_{H,N} = F_{CF} + M * 5 \text{ MHz}.$$

In all of the above-mentioned frequency bands, the low priority carrier frequencies may be determined according to:

$$F_{L,n} = F_{H,M} +/- n * 100 \text{ kHz}$$

and

$$F_{L,n} = F_{H,N} +/- n * 100 \text{ kHz}.$$

It is to be understood that the high priority bandwidths as shown above are one example of implementing concepts according to an embodiment of the invention. In other embodiments, other high priority bandwidths in the different frequency bands may be selected as appropriate.

As can be seen, a first set of high priority carrier frequencies is determined to be above the starting carrier frequency $F_{CF}$, and a second set of high priority carrier frequencies is determined to be below the starting carrier frequency. By successively increasing M and N, e.g. by incrementing both M and M by one at a time, a successively growing frequency range around the starting carrier frequency $F_{CF}$ can be evaluated. Once a cell is found on an evaluated carrier frequency, this carrier frequency can be used as a new starting carrier frequency $F_{CF}$, and the process can be repeated in an iterative manner. The low priority carrier frequencies corresponding to a pair of high priority carrier frequencies can then be evaluated before incrementing M and N so as to go to the next high priority carrier frequency. Keeping track of already evaluated carrier frequencies is desirable so as to avoid redundant evaluations.

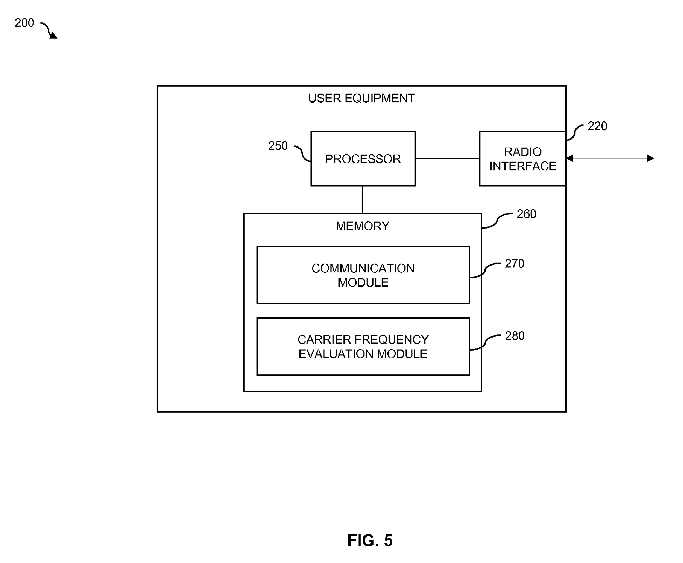

Fig. 5 shows a block diagram for schematically illustrating an exemplary implementation of the UE 200. As explained above, the UE 200 may be configured as a mobile terminal according to the 3GPP LTE specifications. The UE 200 may be a mobile phone, a portable computer, or any other type of mobile terminal.

As illustrated, the UE 200 includes a radio interface 220, which has the purpose of allowing the UE 200 to receive downlink communication signals with respect to one or more cells of the Mobile communication system. The radio interface 220 may further allow the UE 200 to also transmit uplink communication signals to one or more cells of the mobile communication system. For this purpose, the radio interface 220 may include one or more suitably configured receivers, transmitters and/or antennas. Further, UE 200 includes a processor 250 coupled to the radio interface 220 and a memory 260 coupled to the processor 250. The memory 260 may include a read-only memory (ROM), e.g. a flash ROM, a random-access memory (RAM), e.g. a Dynamic RAM (DRAM) or static RAM (SRAM), a mass storage, e.g. a hard disk or solid state disk, or the like. The memory 260 includes suitably configured program code to be executed by the processor 250 so as to implement the functionalities of the UE 200. More specifically, the memory 260 may include a communication module 270 so as to implement general communication functionalities, e.g. processing of communication signals or the like, and a carrier frequency evaluation module 280 so as to implement carrier frequency evaluation processes as described above. That is to say, the processor 250, the memory 260 and the frequency evaluation module 280 implement a frequency evaluator of the UE 200. In other embodiments, the frequency evaluator may also be implemented using one or more dedicated hardware components.

It is to be understood that the structure of the UE 200 as illustrated in Fig. 5 is merely schematic and that the UE 200 may actually include further components which, for the sake of clarity, have not been illustrated, for example specific signal processors, decoders, encoders, user interface components, or the like. Also, it is to be understood that the memory 260 may include further types of data and program code modules, which have not been illustrated, e.g. program code modules for implementing known functionalities of mobile terminals according to the 3GPP LTE specifications.

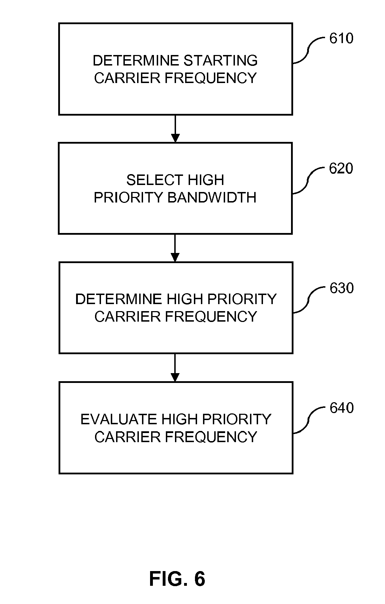

Fig. 6 shows a flowchart illustrating a method according to an embodiment of the invention. The method may be used in the UE 200 for evaluating carrier frequencies in a downlink frequency band, e.g. a downlink frequency band in a mobile communication system according to the 3GPP LTE specifications as explained in connection with Figs. 2-4.

At step 610, a starting carrier frequency is determined. The starting carrier frequency may be a carrier frequency which is known or at least assumed to be used by a cell of the mobile communication system. In some embodiments, the starting carrier frequency is an operator defined carrier frequency. In some embodiments, the starting carrier frequency may be a carrier frequency which was found to be used by a cell, e.g. in a preceding scan.

At step 620, at least one high priority bandwidth is selected from the plurality of supported bandwidths. In some embodiments, a group of high priority bandwidths may be selected and a bandwidth priority order may be defined in the group of high priority bandwidths. In some embodiments, the high priority bandwidth may be selected on the basis of bandwidth priority data received from an operator of the mobile communication system. In some embodiments, the high priority bandwidth may be selected on the basis of bandwidth priority data preconfigured in the UE. In some embodiments, the high priority bandwidth may also be selected on the basis of learned bandwidth priority data. For example, the UE may keep track of earlier scan results and store a bandwidth which is frequently used in a certain frequency band as learned high priority bandwidth. Different high priority bandwidths may be learned for specific geographic regions and/or operators. In some embodiments, the UE may also keep a history of used bandwidths for a frequency band, and the last used bandwidth may be used as high priority bandwidth. Further, in some embodiments the high priority bandwidth may be selected in such a way that one or more of the other bandwidths supported by the frequency band are integer multiples of the high priority bandwidth. In this way, different possible bandwidths can be covered in an efficient manner.

At step 630, at least one high priority carrier frequency is determined, which is spaced apart from the starting carrier frequency by an integer multiple of the high priority bandwidth. In some embodiments, multiple high priority carrier frequencies may be determined on the basis of a group of high priority bandwidths. In some embodiments, two high priority carrier frequencies may be determined, one being located at distance of the high priority bandwidth below the starting carrier frequency, and the other being located at a distance of the high priority bandwidth above the starting carrier frequency. Additional high priority carrier frequencies may be located below and/or above the starting carrier frequency at distances corresponding to higher multiples of the starting carrier frequency.

At step 640, the at least one high priority carrier frequency is evaluated so as to determine if this high priority carrier frequency is used by a cell of the mobile communication system. If multiple high priority carrier frequencies are determined on the basis of a group of high priority bandwidths, the high priority carrier frequencies derived from the group of high priority bandwidths may be evaluated in the order corresponding to the bandwidth priority order. If the high priority carrier frequency is found to be used by a cell, this found carrier frequency may be selected as a new starting carrier frequency for repeating the above process. Accordingly, in some embodiments, the starting carrier frequency and/or the high priority carrier frequencies may be redetermined in an iterative manner.

Further, if it is found that the at least one high priority carrier frequency is not used by a cell of the mobile communication system, e.g. if no cell is found on a set of presently evaluated high priority carrier frequencies, at least one low priority carrier frequency may be determined. The low priority carrier frequency may be determined as being spaced apart from a particular one of the high priority frequencies by an integer multiple of a carrier frequency raster used in said downlink frequency band. For example, in the case of a mobile communication system according to the 3GPP LTE specifications, the carrier frequency raster is 100 kHz, and the low priority carrier frequencies may be spaced apart from the high priority carrier frequency by integer multiples of 100 kHz. The low priority carrier frequency or frequencies may then be evaluated so as to determine whether one or more of them are used by a cell of the mobile communication system. If one of the low priority carrier frequencies is found to be used by a cell, this found carrier frequency may be selected as a new starting carrier frequency for repeating the above process, e.g. by determining a new high priority carrier frequency, using the found carrier frequency as starting frequency in the above-described processes.

Further, it may happen that by using different starting carrier frequencies or high priority bandwidths, a high priority carrier frequency or a low priority frequency is determined which has already been evaluated before. Therefore, in order to avoid redundant evaluations, evaluation data may be stored so as to keep track of already evaluated carrier frequencies. In particular, the stored evaluation data may indicate those carrier frequencies of the downlink frequency band which have already been evaluated.

Using the above concepts according to embodiments of the invention, the UE may evaluate the carrier frequencies of DL frequency bands in an efficient manner, thereby obtaining a faster access to a desired service. Waiting times, e.g. when resuming coverage or after power-on can be reduced. The concepts may be applied without requiring a frequency history or the like. Moreover, the evaluation may also turn out that the evaluated access technology, e.g. 3GPP LTE, is not available and that an alternative access technology should be used. In the latter case, the described concepts allow for faster switching to the alternative access technology.

It is to be understood that the examples and embodiments as explained above are merely illustrative and susceptible to various modifications. For example, the concepts could be used in other types of mobile communication systems supporting a plurality of bandwidths in a downlink frequency band. Also, the search strategies described herein may be suitably combined with other types of search strategies. Further, it is to be understood that the above concepts may be implemented by using dedicated hardware in the UE or by providing suitably configured software or program code to be executed by a processor of the UE. Accordingly, some embodiments of the invention also relate to a computer program product comprising such a program code, e.g. on a storage medium. For example, the program code may include the program code modules as explained in connection with Fig. 5.

**Claims**

1. A method of evaluating carrier frequencies in a mobile communication system supporting a plurality of bandwidths in a downlink frequency band, comprising:

   determining a starting carrier frequency in said downlink frequency band;
   selecting at least one high priority bandwidth from said plurality of bandwidths;
   determining at least one high priority carrier frequency, said high priority carrier frequency being spaced apart from the starting carrier frequency by an integer multiple of the at least one high priority bandwidth; and
   evaluating the at least one high priority carrier frequency so as to determine whether the at least one high priority frequency is used by a cell (100-1, 100-2, 100-3, 100-4, 100-5, 100-6) of the mobile communication system.

2. The method according to claim 1, comprising:

   selecting the at least one high priority bandwidth on the basis of bandwidth priority data received from an operator of the mobile communication system.

**3.** The method according to claim 1 or 2, comprising:

selecting the at least one high priority bandwidth on the basis of preconfigured bandwidth priority data.

**4.** The method according to any one of the preceding claims, comprising:

selecting the at least one high priority bandwidth on the basis of learned bandwidth priority data.

**5.** The method according to any one of the preceding claims, comprising:

selecting the at least one high priority bandwidth in such a way that one or more of the other bandwidths supported by the downlink frequency band are integer multiples of the high priority bandwidth.

**6.** The method according to any one of the preceding claims, comprising:

determining at least two high priority carrier frequencies, at least one of said high priority carrier frequencies being spaced apart from the starting carrier frequency by a positive integer multiple of the at least one high priority bandwidth and at least one of said high priority carrier frequencies being spaced apart from the starting carrier frequency by a negative integer multiple of the at least one high priority bandwidth.

**7.** The method according to any one of the preceding claims,
wherein the starting carrier frequency is a carrier frequency which is known to be used by a cell (100-1, 100-2, 100-3, 100-4, 100-5, 100-6) of the mobile communication system.

**8.** The method according to any one of the preceding claims,
wherein the starting carrier frequency is an operator defined carrier frequency.

**9.** The method according to any one of the preceding claims, comprising:

if it is determined that the at least one high priority carrier frequency is used by a cell (100-1, 100-2, 100-3, 100-4, 100-5, 100-6) of the mobile communication system:

selecting the at least one high priority carrier frequency as a new starting carrier frequency;
determining at least one high priority carrier frequency, said high priority carrier frequency being spaced apart from the new starting carrier frequency by an integer multiple of the at least one high priority bandwidth; and
evaluating the at least one high priority carrier frequency so as to determine whether the at least one high priority frequency is used by a cell (100-1, 100-2, 100-3, 100-4, 100-5, 100-6) of the mobile communication system.

**10.** The method according to any one of the preceding claims, comprising:

if it is determined that the at least one high priority carrier frequency is not used by a cell (100-1, 100-2, 100-3, 100-4, 100-5, 100-6) of the mobile communication system:

determining at least one low priority carrier frequency which is spaced apart from the at least one high priority frequency by an integer multiple of a carrier frequency raster used in said downlink frequency band; and
evaluating the at least one low priority carrier frequency so as to determine whether the at least one low priority frequency is used by a cell (100-1, 100-2, 100-3, 100-4, 100-5, 100-6) of the mobile communication system.

**11.** The method according to claim 10, comprising:

if it is determined that the at least one low priority carrier frequency is used by a cell (100-1, 100-2, 100-3, 100-4, 100-5, 100-6) of the mobile communication system:

selecting the at least one low priority carrier frequency as a new starting carrier frequency;

determining at least one high priority carrier frequency, said high priority carrier frequency being spaced apart from the new starting carrier frequency by an integer multiple of the high priority bandwidth; and evaluating the at least one high priority carrier frequency so as to determine whether the at least one high priority frequency is used by a cell (100-1, 100-2, 100-3, 100-4, 100-5, 100-6) of the mobile communication system.

12. The method according to any one of the preceding claims, comprising:

storing evaluation data indicating those carrier frequencies in said downlink frequency band which have already been evaluated.

13. The method according to any one of the preceding claims, comprising:

selecting a group of high priority bandwidths;
defining a bandwidth priority order in the group of high priority bandwidths; and
evaluating the high priority carrier frequencies derived from the group of high priority bandwidths in the order corresponding to the bandwidth priority order.

14. A mobile terminal (200) to be used in a mobile communication system supporting a plurality of bandwidths in a downlink frequency band, comprising:

a carrier frequency evaluator configured to determine a starting carrier frequency in said downlink frequency band, to select at least one high priority bandwidth from said plurality of bandwidths, to determine at least one high priority carrier frequency, said high priority carrier frequency being spaced apart from the starting carrier frequency by an integer multiple of the at least one high priority bandwidth, and to evaluate the at least one high priority carrier frequency so as to determine whether the at least one high priority frequency is used by a cell (100-1, 100-2, 100-3, 100-4, 100-5, 100-6) of the mobile communication system.

15. The mobile terminal according to claim 14,
wherein the mobile terminal is configured to perform a method as defined in any one of claims 1 to 13.

100-1

100-2

100-3

100-4

200

100-5

100-5

100-6

**FIG. 1**

| Frequency Band No. | UL frequency band | | DL frequency band | | Duplex Mode |
|---|---|---|---|---|---|
| | $F_{UL\_low}$ – $F_{UL\_high}$ | | $F_{DL\_low}$ – $F_{DL\_high}$ | | |
| 1 | 1920 MHz – | 1980 MHz | 2110 MHz – | 2170 MHz | FDD |
| 2 | 1850 MHz – | 1910 MHz | 1930 MHz – | 1990 MHz | FDD |
| 3 | 1710 MHz – | 1785 MHz | 1805 MHz – | 1880 MHz | FDD |
| 4 | 1710 MHz – | 1755 MHz | 2110 MHz – | 2155 MHz | FDD |
| 5 | 824 MHz – | 849 MHz | 869 MHz – | 894MHz | FDD |
| 6 | 830 MHz – | 840 MHz | 875 MHz – | 885 MHz | FDD |
| 7 | 2500 MHz – | 2570 MHz | 2620 MHz – | 2690 MHz | FDD |
| 8 | 880 MHz – | 915 MHz | 925 MHz – | 960 MHz | FDD |
| 9 | 1749.9 MHz – | 1784.9 MHz | 1844.9 MHz – | 1879.9 MHz | FDD |
| 10 | 1710 MHz – | 1770 MHz | 2110 MHz – | 2170 MHz | FDD |
| 11 | 1427.9 MHz – | 1452.9 MHz | 1475.9 MHz – | 1500.9 MHz | FDD |
| 12 | 698 MHz – | 716 MHz | 728 MHz – | 746 MHz | FDD |
| 13 | 777 MHz – | 787 MHz | 746 MHz – | 756 MHz | FDD |
| 14 | 788 MHz – | 798 MHz | 758 MHz – | 768 MHz | FDD |
| … | | | | | |
| 17 | 704 MHz – | 716 MHz | 734 MHz – | 746 MHz | FDD |
| … | | | | | |
| 33 | 1900 MHz – | 1920 MHz | 1900 MHz – | 1920 MHz | TDD |
| 34 | 2010 MHz – | 2025 MHz | 2010 MHz – | 2025 MHz | TDD |
| 35 | 1850 MHz – | 1910 MHz | 1850 MHz – | 1910 MHz | TDD |
| 36 | 1930 MHz – | 1990 MHz | 1930 MHz – | 1990 MHz | TDD |
| 37 | 1910 MHz – | 1930 MHz | 1910 MHz – | 1930 MHz | TDD |
| 38 | 2570 MHz – | 2620 MHz | 2570 MHz – | 2620 MHz | TDD |
| 39 | 1880 MHz – | 1920 MHz | 1880 MHz – | 1920 MHz | TDD |
| 40 | 2300 MHz – | 2400 MHz | 2300 MHz – | 2400 MHz | TDD |

## FIG. 2

| Frequency Band | 1.4 MHz | 3 MHz | 5 MHz | 10 MHz | 15 MHz | 20 MHz |
|---|---|---|---|---|---|---|
| 1 | | | X | X | X | X |
| 2 | X | X | X | X | X | X |
| 3 | X | X | X | X | X | X |
| 4 | X | X | X | X | X | X |
| 5 | X | X | X | X | | |
| 6 | | | X | X | | |
| 7 | | | X | X | X | X |
| 8 | X | X | X | X | | |
| 9 | | | X | X | X | X |
| 10 | | | X | X | X | X |
| 11 | | | X | X | | |
| 12 | X | X | X | X | | |
| 13 | | | X | X | | |
| 14 | | | X | X | | |
| ... | | | | | | |
| 17 | | | X | X | | |
| ... | | | | | | |
| 33 | | | X | X | X | X |
| 34 | | | X | X | X | |
| 35 | X | X | X | X | X | X |
| 36 | X | X | X | X | X | X |
| 37 | | | X | X | X | X |
| 38 | | | X | X | X | X |
| 39 | | | X | X | X | X |
| 40 | | | X | X | X | X |

**FIG. 3**

14

| Frequency Band | Downlink | | | Uplink | | |
|---|---|---|---|---|---|---|
| | $F_{DL\_low}$ (MHz) | $N_{Offs\text{-}DL}$ | | $F_{UL\_low}$ (MHz) | $N_{Offs\text{-}UL}$ | |
| 1 | 2110 | 0 | 0 – 599 | 1920 | 18000 | 18000 – 18599 |
| 2 | 1930 | 600 | 600 – 1199 | 1850 | 18600 | 18600 – 19199 |
| 3 | 1805 | 1200 | 1200 – 1949 | 1710 | 19200 | 19200 – 19949 |
| 4 | 2110 | 1950 | 1950 – 2399 | 1710 | 19950 | 19950 – 20399 |
| 5 | 869 | 2400 | 2400 – 2649 | 824 | 20400 | 20400 – 20649 |
| 6 | 875 | 2650 | 2650 – 2749 | 830 | 20650 | 20650 – 20749 |
| 7 | 2620 | 2750 | 2750 – 3449 | 2500 | 20750 | 20750 – 21449 |
| 8 | 925 | 3450 | 3450 – 3799 | 880 | 21450 | 21450 – 21799 |
| 9 | 1844.9 | 3800 | 3800 – 4149 | 1749.9 | 21800 | 21800 – 22149 |
| 10 | 2110 | 4150 | 4150 – 4749 | 1710 | 22150 | 22150 – 22749 |
| 11 | 1475.9 | 4750 | 4750 – 4999 | 1427.9 | 22750 | 22750 – 22999 |
| 12 | 728 | 5000 | 5000 - 5179 | 698 | 23000 | 23000 - 23179 |
| 13 | 746 | 5180 | 5180 – 5279 | 777 | 23180 | 23180 – 23279 |
| 14 | 758 | 5280 | 5280 – 5379 | 788 | 23280 | 23280 – 23379 |
| … | | | | | | |
| 17 | 734 | 5730 | 5730 – 5849 | 704 | 23730 | 23730 - 23849 |
| … | | | | | | |
| 33 | 1900 | 36000 | 36000 – 36199 | 1900 | 36000 | 36000 – 36199 |
| 34 | 2010 | 36200 | 36200 – 36349 | 2010 | 36200 | 36200 – 36349 |
| 35 | 1850 | 36350 | 36350 – 36949 | 1850 | 36350 | 36350 – 36949 |
| 36 | 1930 | 36950 | 36950 – 37549 | 1930 | 36950 | 36950 – 37549 |
| 37 | 1910 | 37550 | 37550 – 37749 | 1910 | 37550 | 37550 – 37749 |
| 38 | 2570 | 37750 | 37750 – 38249 | 2570 | 37750 | 37750 – 38249 |
| 39 | 1880 | 38250 | 38250-38649 | 1880 | 38250 | 38250-38649 |
| 40 | 2300 | 38650 | 38650-39649 | 2300 | 38650 | 38650-39649 |

**FIG. 4**

FIG. 5

DETERMINE STARTING
CARRIER FREQUENCY — 610

SELECT HIGH
PRIORITY BANDWIDTH — 620

DETERMINE HIGH PRIORITY
CARRIER FREQUENCY — 630

EVALUATE HIGH PRIORITY
CARRIER FREQUENCY — 640

FIG. 6

Europäisches
Patentamt

European
Patent Office

Office européen
des brevets

**EUROPEAN SEARCH REPORT**

Application Number

EP 10 16 4698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2007/036869 A2 (KONINKL PHILIPS ELECTRONICS NV [NL]; DURAND JEROME [DE]; DUMAZY JEAN []) 5 April 2007 (2007-04-05)<br>* page 6, line 24 - line 28 *<br>----- | 1-8, 12-15<br><br>9-11 | INV.<br>H04W48/16 |
| A | EP 1 906 686 A1 (NOKIA SIEMENS NETWORKS GMBH [DE]) 2 April 2008 (2008-04-02)<br>* paragraph [0031] - paragraph [0032] *<br>----- | 1-4,7,8, 12,14,15 | |

TECHNICAL FIELDS
SEARCHED (IPC)

H04W

The present search report has been drawn up for all claims

| Place of search | Date of completion of the search | Examiner |
|---|---|---|
| Berlin | 17 November 2010 | Farese, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 10 16 4698

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2010

| Patent document cited in search report | | Publication date | Patent family member(s) | | Publication date |
|---|---|---|---|---|---|
| WO 2007036869 | A2 | 05-04-2007 | CN<br>EP<br>JP<br>US | 101273589 A<br>1932297 A2<br>2009510882 T<br>2008212540 A1 | 24-09-2008<br>18-06-2008<br>12-03-2009<br>04-09-2008 |
| EP 1906686 | A1 | 02-04-2008 | NONE | | |

EPO FORM P0459

For more details about this annex : see Official Journal of the European Patent Office, No. 12/82